# EUROPÄISCHE PATENTSCHRIFT

(11) **EP 1 880 939 B1**
(45) Veröffentlichungstag und Bekanntmachung des Hinweises auf die Patenterteilung: **14.10.2009**
(21) Anmeldenummer: 06016265.8
(22) Anmeldetag: 03.08.2006
(51) Int. Cl.: B64D 13/06

(54) **Flugzeugklimaanlage und Verfahren zum Betreiben einer Flugzeugklimaanlage**
Aircraft air conditioning system and method of operating an aircraft air conditioning system
Système de conditionnement d'air pour aéronef et procédé de mise en oeuvre d'un système de conditionnement d'air pour aéronef

(30) Priorität: 17.07.2006 DE 102006032979
(43) Veröffentlichungstag der Anmeldung: 23.01.2008
(73) Patentinhaber: Liebherr-Aerospace Lindenberg GmbH, 88161 Lindenberg/Allgäu (DE)
(72) Erfinder: Vögel, Franz Martin, 88161 Lindenberg (DE)
(74) Vertreter: Herrmann, Uwe

(56) Entgegenhaltungen:
- EP-A- 1 595 788
- DE-A1- 19 935 918
- FR-A1- 2 349 799
- FR-A1- 2 509 842
- US-A- 4 261 416
- US-A- 4 308 993

## Beschreibung

Die Erfindung betrifft eine Flugzeugklimaanlage mit wenigstens einem Verdichter, mit einer ersten Leitung, die mit der Druckseite des Verdichters in Verbindung steht und in der eine oder mehrere, dem Verdichter nachgeschaltete Kühleinrichtungen zur Kühlung der in dem Verdichter komprimierten Luft angeordnet sind, sowie mit einer zweiten, als Bypass-Leitung ausgeführten Leitung, die ebenfalls mit der Druckseite des Verdichters in Verbindung steht und die derart angeordnet ist, dass sie wenigstens einen Teil der in dem Verdichter komprimierten Luft im Bypass um wenigstens eine der Kühleinrichtungen führt, wobei in der Bypass-Leitung eine Drosseleinrichtung angeordnet ist, mittels derer der Massenstrom, der durch die Bypass-Leitung geführten Luft variierbar ist.

Flugzeugklimaanlagen, die mit Umgebungsluft oder vorverdichteter Luft beaufschlagte Verdichter aufweisen, sind in zahlreichen unterschiedlichen Ausführungsformen bekannt. Bei elektrisch angetriebenen Flugzeugklimaanlagen zur Frischluftversorgung, Klimatisierung und Bedruckung besteht ein Problem darin, dass bei vorgegebenem Massendurchsatz durch die Verstellung der Drosseleinrichtung, die in der Bypass-Leitung angeordnet ist, die Druckverhältnisse auf der Verdichterauslassseite geändert werden, was wiederum dazu führt, dass sich auch die Temperatur der komprimierten Luft ändert.

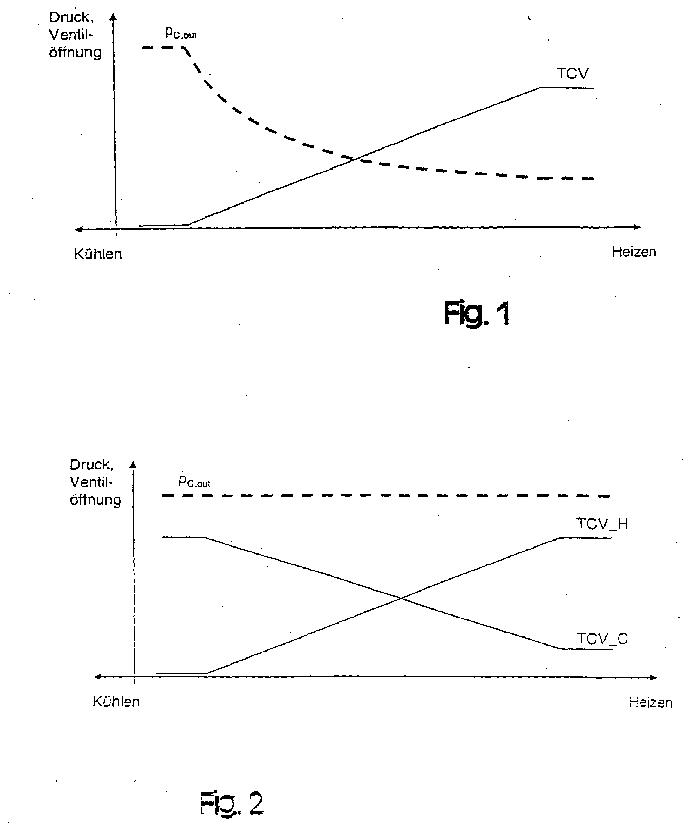

Fig. 1 zeigt diese Zusammenhänge und verdeutlicht, dass beim Öffnen des Ventils TCV, das sich in der genannten Bypass-Leitung befindet, der Druck auf der Ventilauslassseite fällt, was zu einer Temperaturminderung führt. Der entsprechend umgekehrte Vorgang vollzieht sich beim Drosseln des Ventils TCV, wodurch zwar einerseits der Massenstrom, der durch die Bypass-Leitung geführten Luft verringert wird, jedoch sich andererseits der Druck am Verdichterausgang erhöht, was den Effekt der gewünschten Temperaturänderung mindert oder aufhebt. Somit ist festzuhalten, dass bei Umlenkung eines Teilmassenstroms um die zur Kühlung vorgesehenen Einrichtungen, mit der Absicht, die nach dem erneuten Zusammenführen der Luftströme sich einstellende Temperatur anzuheben, die Durchlässigkeit des Gesamtsystems durch Öffnen des Ventils TCV erhöht wird, was jedoch bewirkt, dass die Lufttemperatur am Verdichterauslass aufgrund des Druckabfalls sinkt. Je nach Umgebungsbedingung überwiegt nun der eine oder der andere Effekt. Im Extremfall kann das Öffnen des Ventils TCV, mit dem an sich eine Zufuhr von Warmluft bewirkt werden soll, dazu führen, dass die der Mischkammer oder Flugzeugkabine zugeführte Luft gar keine Temperaturänderung erfährt, da die Temperatur am Verdichterauslass aufgrund der dort vorhandenen Druckminderung gefallen ist.

Damit ergibt sich zusammenfassend, dass bei vorbekannten Systemen eine reproduzierbare Korrelation zwischen der Variation des Durchlasses der in der Bypass-Leitung befindlichen Drosseleinrichtung einerseits und der dadurch realisierten Temperaturänderung andererseits nicht besteht oder nur schwer zu realisieren ist. Es ist daher die Aufgabe der Erfindung, eine Flugzeugklimaanlage der eingangs genannten Art dahingehend weiterzubilden, dass die Temperatursteuerung bzw. Temperaturregelung durch Variation des Durchlasses der in der Bypass-Leitung befindlichen Drosseleinrichtung vereinfacht wird.

Diese Aufgabe wird durch eine Flugzeugklimaanlage mit den Merkmalen des Anspruchs 1 gelöst.

Danach ist vorgesehen, dass auch in der ersten Leitung, die die genannten Kühleinrichtungen aufweist, eine Drosseleinrichtung angeordnet ist, mittels derer der Massenstrom der durch die erste Leitung geführten Luft variierbar ist.

Erfindungsgemäß ist eine Einheit vorgesehen, die einem zweiten Betriebsmodus betreibbar ist. Die Einheit kann derart ausgeführt sein, dass sie ausschließlich in dem ersten Betriebsmodus betrieben werden kann. Sie kann auch derart ausgeführt sein, dass sie ausschließlich in dem zweiten derart ausgeführt ist, dass sie wahlweise in dem ersten oder in dem zweiten Betriebsmodus betrieben werden kann.

Die Einheit ist derart ausgeführt, dass sie in dem ersten Betriebsmodus beim Vergrößern des Durchlasses der in der Bypass-Leitung befindlichen Drosseleinrichtung eine Verringerung des Durchlasses der in der ersten Leitung befindlichen Drosseleinrichtung bewirkt und ebenfalls umgekehrt beim Verringern des Durchlasses der in der Bypass-Leitung befindlichen Drosseleinrichtung eine Vergrößerung des Durchlasses der in der ersten Leitung befindlichen Drosseleinrichtung bewirkt. Aufgrund der Schaffung einer Drosseleinrichtung in den Massenstrom, der über die Kühleinrichtung(en) gelenkt wird, ist es möglich, die Bedingungen am Verdichterauslass so zu gestalten, dass die Variation des Durchlasses der in der Bypass-Leitung angeordneten Drosseleinrichtung nicht oder nur unwesentlich zu einer Änderung des Verdichterausgangsdruckniveaus führt. Auf diese Weise kann ein stetiger reproduzierbarer Zusammenhang zwischen der Ventilstellung der Drosseleinrichtung der Bypass-Leitung und der Temperatur des der Mischkammer oder Flugzeugkabine zugeführten Luftstroms erzielt werden. Eine ausschließlich diesen Betriebsmodus aufweisende Flugzeugklimaanlage ist aus der US-4308993 und der FR-2 509 842 bekannt.

In dem erfindungsgemäßen zweiten Betriebsmodus veranlasst die Einheit eine Vergrößerung des Durchlasses der in der Bypass-Leitung befindlichen Drosseleinrichtung sowie eine Vergrößerung des Durchlasses der in der ersten Leitung befindlichen Drosseleinrichtung oder eine Verringerung des Durchlasses der in der Bypass-Leitung befindlichen Drosseleinrichtung und eine Verringerung des Durchlasses der in der ersten Leitung befindlichen Drosseleinrichtung. Ein derartiger Betriebsmodus kann dann gewählt werden, wenn die Durchlässigkeit der Flugzeugklimaanlage gesteuert oder geregelt werden soll, Soll die Durchlässigkeit der Flugzeugklimaanlage erhöht werden, werden die Durchlässe beider Drosseleinrichtungen vergrößert, soll die Durchlässigkeit der Flugzeugklimaanlage verkleinert werden, werden die Durchlässe beider Drosseleinrichtungen verringert.

Ebenfalls ist denkbar, dass die Einheit derart ausgeführt ist, dass sie grundsätzlich in beiden Betriebsmodi betreibbar ist, d.h bei Bedarf in einem Temperaturregelmodus oder Temperatursteuermodus (erster Betriebsmodus) und bei Bedarf in einem Durchlässigkeitsregelmodus oder Durchlässigkeitssteuermodus (zweiter Betriebsmodus). Dabei kann die Wahl des Betriebsmodus beispielsweise von den Umgebungsbedingungen im Bodenbetrieb bzw. während des Fluges abhängen.

In weiterer Ausgestaltung der Erfindung ist vorgesehen, dass die Veränderung der Durchlässe der Drosseleinrichtungen derart erfolgt, dass der Druck am Verdichterauslass bei der Veränderung der Durchlässe konstant oder im wesentlichen konstant bleibt. Im Gegensatz zu vorbekannten Ausgestaltungen ist somit vorgesehen, dass eine Variation des Verdichterauslaßdruckes durch Änderung des Durchlasses der in der Bypass-Leitung befindlichen Drosseleinrichtung verhindert oder weitgehend verhindert wird.

Vorzugsweise ist die Einheit als Temperatur-Regelungseinheit ausgeführt. Es können eine oder mehrere mit dieser Regelungseinheit in Verbindung stehende Temperatursensoren vorgesehen sein, die die Temperatur der Luft an geeigneter Stelle in der Flugzeugklimaanlage messen, wobei die Temperatur-Regelungseinheit derart ausgeführt ist, dass sie bei Feststellung einer Abweichung zwischen Ist- und Sollwert den Durchlaß der in der Bypass-Leitung befindlichen Drosseleinrichtung zum Zwecke der Verringerung der Abweichung zwischen Soll- und Istwert variiert. Erfindungsgemäß erfolgt dabei ebenfalls eine Variation des Durchlasses der in der ersten Leitung befindlichen Drosseleinrichtung.

Denkbar ist beispielsweise, dass der Temperatursensor stromabwärts der Einmündung der Bypass-Leitung in die erste Leitung angeordnet ist, d. h. die Mischtemperatur erfasst und dass dieser Wert als zu regelnde Größe herangezogen wird. Selbstverständlich sind auch andere Anordnungen des Temperatursensors denkbar.

Insbesondere kann der Temperatursensor in der ersten Leitung auch vor, d. h. stromaufwärts der Mündungsstelle der Bypass-Leitung in die erste Leitung angeordnet sein.

Die genannten in der ersten Leitung befindlichen Kühleinrichtungen können durch einen Stauluftwärmetauscher, der durch Stau- oder Umgebungsluft gekühlt wird, und/oder durch einen Vapour Cycle und/oder durch eine Turbine zur Entspannung von in dem Verdichter komprimierter Luft gebildet werden.

In der ersten Leitung kann eine Turbine zur Entspannung von in dem Verdichter komprimierter Luft und ein der Turbine vorgeschalteter Wasserabscheidekreislauf angeordnet sein.

In einer weiteren Ausgestaltung der Erfindung ist vorgesehen, dass in der ersten Leitung eine Turbine zur Entspannung von in dem Verdichter komprimierter Luft angeordnet ist und dass die Turbine mit dem Verdichter auf einer Welle sitzt und eine Air-Cycle-Machine bildet.

Der Verdichter kann motorbetrieben sein, wobei der Motor ebenfalls auf der Welle sitzen kann, auf dem sich der Verdichter und die Turbine befindet.

Der Verdichter kann grundsätzlich ein- oder mehrstufig ausgeführt sein. Denkbar ist, dass der Verdichter durch mehrere Verdichtereinheiten gebildet wird, die ein- oder mehrstufig ausgeführt sind und getrennt hintereinander angeordnet sind oder durch eine Welle miteinander verbunden sind. In weiterer Ausgestaltung der Erfindung kann vorgesehen sein, dass zwischen den Verdichtern bzw. zwischen den Verdichterstufen eine Zwischenkühlung vorgesehen ist. Selbstverständlich sind auch Ausführungsformen ohne eine solche Zwischenkühlung denkbar.

Außer dem genannten Verdichter können eine oder mehrere weitere durch einen Motor betriebenen Verdichter vorgesehen sein, die unabhängig von dem Verdichter und parallel zu diesem betreibbar sind.

In weiterer Ausgestaltung der Erfindung ist vorgesehen, dass die beiden Drosseleinrichtungen als getrennte Bauelemente oder als einheitliches Bauteil ausgeführt sind. Denkbar ist beispielsweise, dass dieses einheitliche Bauteil ein Ventil darstellt, dass gleichzeitig die Durchlässigkeit durch die erste Leitung und die Durchlässigkeit durch die Bypass-Leitung verändern kann. Denkbar ist beispielsweise ein Stößel, der derart hin- und herbewegbar ist, dass er bei der Bewegung in eine Richtung die Durchlässigkeit der ersten Leitung verringert und gleichzeitig die Durchlässigkeit der Bypass-Leitung erhöht und bei der Bewegung in die andere Richtung die Durchlässigkeit durch die Bypass-Leitung verringert und die Durchlässigkeit durch die erste Leitung erhöht. Hierzu sind beliebige Ausgestaltungen eines solchen Ventils denkbar, beispielsweise auch eine konische Ausführung eines Ventilstößels bzw. Ventilsitzes, durch die beliebige Charakteristiken realisiert werden können, wie die Durchlässigkeit der Drosseleinrichtung von der Position des Stößels oder Ventilkörpers abhängt.

In weiterer Ausgestaltung der Erfindung ist vorgesehen, dass eine Massenstrom-Regeleinheit zur Regelung des Massenstroms durch die Flugzeugklimaanlage vorgesehen ist, wobei eine oder mehrere mit der Massenstromregeleinheit in Verbindung stehende Durchsatzmeßeinrichtungen sowie Stellglieder vorgesehen sind, mittels derer der Massenstrom variierbar ist.

Die Stellglieder können durch Mittel zur Verstellung der Drehzahl eines den Verdichter antreibenden Motors gebildet werden.

Die Massenstrom-Regeleinheit und die Temperatur-Regeleinheit können durch unterschiedliche Bauelemente oder auch durch ein- und denselben Prozessor bzw. Controller gebildet werden.

Die Flugzeugklimaanlage kann eine Turbine zur Entspannung der in dem Verdichter komprimierten Luft aufweisen und die Bypass-Leitung kann stromabwärts der Turbine in die erste Leitung münden. Grundsätzlich sind auch andere Mündungspunkte denkbar.

In weiterer Ausgestaltung der Erfindung ist vorgesehen, dass die Flugzeugklimaanlage eine Turbine zur Entspannung der in dem Verdichter komprimierten Luft sowie einen Kondensor aufweist, der der Turbine derart nachgeschaltet ist, dass die Turbinenauslassluft die kalte Seite des Kondensors durchströmt und dass die Bypass-Leitung stromabwärts des Kondensors in die erste Leitung mündet.

Weiterhin kann vorgesehen sein, dass in der ersten Leitung ein Stauluftwärmetauscher sowie ein Wasserabscheidekreislauf angeordnet ist und dass die in der ersten Leitung angeordnete Drosseleinrichtung stromaufwärts des Stauluftwärmetauschers zwischen dem Stauluftwärmetauscher und dem Wasserabscheidekreislauf angeordnet ist oder dem Wasserabscheidekreislauf nachgeschaltet ist.

In weiterer Ausgestaltung der Erfindung ist vorgesehen, dass eine Verbindungsleitung angeordnet ist, die den Auslass des oder der Verdichter mit dessen/deren Einlaß verbindet und dass in der Verbindungsleitung ein Ventil angeordnet ist, mittels dessen der Massenstrom, der durch die Verbindungsleitung strömenden Luft veränderbar ist. Es kann eine weitere Regelungseinheit vorgesehen sein, die die Temperatur der Verdichterauslaßluft regelt, wobei der Temperatur-Ist-Wert durch einen Temperatursensor ermittelt wird und wobei das Ventil der Verbindungsleitung als Stellglied dient.

Die in der ersten Leitung befindliche Drosseleinrichtung kann auch durch eine variable Turbinendüse (variable turbine nozzle) gebildet werden. Denkbar ist somit, dass die Veränderung der Durchlässigkeit bzw. des Massendurchsatzes durch die Turbinendüse vorgenommen wird, was den Vorteil mit sich bringt, dass keine zusätzlichen Elemente bzw. Drosseleinrichtungen vorgesehen werden müssen. Die Turbinennozzle kann somit allein die Veränderung des Durchlässigkeit in der ersten Leitung bewirken. Denkbar ist auch, mehrere Drosseleinrichtungen vorzusehen, von denen eine durch die variable Turbinennozzle gebildet wird, so dass die Aufgabe der Variation der Durchlässigkeit bzw. des Massendurchsatzes auch durch die variable Turbinennozzle übernommen wird.

Unter dem Begriff "Drosseleinrichtung" sind somit nicht nur Elemente zu verstehen, die Energie "vernichten", wie beispielsweise ein Ventil, sondern auch solche, die die Energie umsetzen, wie beispielsweise die genannte Turbinennozzle.

Die Erfindung betrifft ferner ein Verfahren mit den Merkmalen des Anspruchs 25. Bevorzugte Ausgestaltungen des Verfahrens sind Gegenstand der Unteransprüche 26 bis 34.

Weitere Einzelheiten und Vorteile der Erfindung werden anhand eines in der Zeichnung dargestellten Ausführungsbeispiels näher erläutert. Es zeigen:
- Fig. 1:: eine Darstellung der Abhängigkeit des Verdichterauslaßdruckes von dem Durchlaß eines in der Bypass-Leitung angeordneten Drosselventils (TCV) gemäß dem Stand der Technik,
- Fig. 2:: eine Darstellung gemäß Fig. 1 gemäß der Erfindung,
- Fig. 3:: eine schematische Darstellung einer Flugzeugklimaanlage gemäß der Erfindung,
- Fig. 4-6:: unterschiedliche Darstellungen einer Flugzeugklimaanlage gemäß der Erfindung mit an unterschiedlicher Position angeordneten Drosseleinrichtungen und
- Fig. 7:: eine weitere schematische Darstellung einer Flugzeugklimaanlage gemäß der Erfindung mit variabler Turbinennozzle.

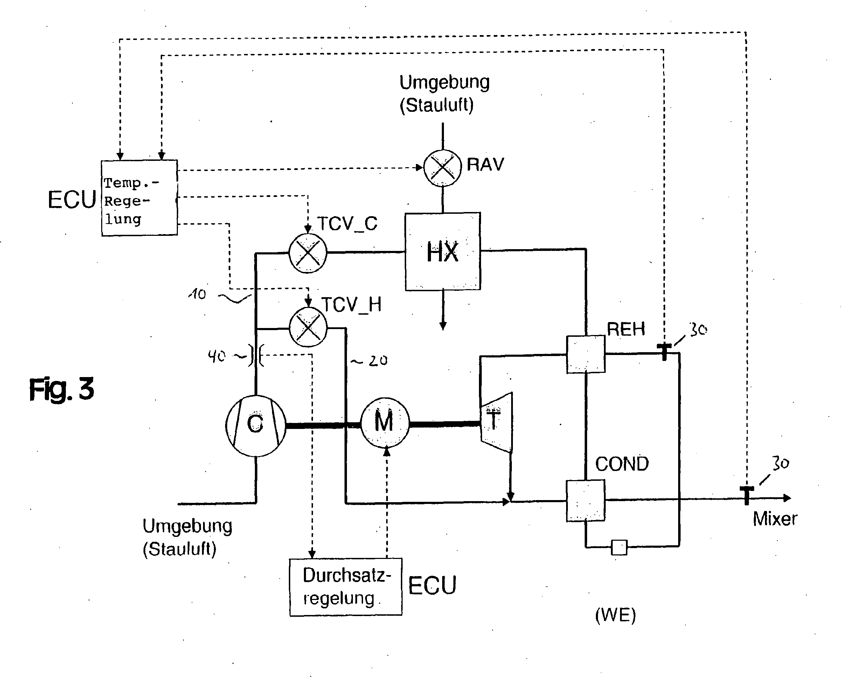

Figur 3 zeigt in einer ersten schematischen Darstellung die Flugzeugklimaanlage gemäß der Erfindung. Der Verdichter C wird einlaßseitig mit Umgebungs- oder Stauluft oder beispielsweise auch mit vorverdichteter Luft beaufschlagt. Auf der Druckseite des Verdichters befindet sich die erste Leitung 10, von der eine Bypass-Leitung 20 abzweigt.

In der ersten Leitung 10 befindet sich im Anschluß an diese Abzweigung eine Drosseleinrichtung TCV_C, mit der der Massenstrom durch die erste Leitung veränderbar ist. Stromabwärts dieser Drosseleinrichtung befindet sich der Stauluftwärmetauscher HX, der durch Stau- oder Umgebungsluft durchströmt wird und auf seiner warmen Seite von der Verdichterauslaßluft durchströmt, die in dem Wärmetauscher HX eine Kühlung erfährt.

Der Massenstrom der Umgebungs- oder Stauluft wird mittels des auf der Stauluftseite befindlichen Ventils RAV variiert, wie dies in Figur 3 angedeutet ist.

Die verdichtete, in dem Staulufwärmetauscher HX gekühlte Luft gelangt sodann in den Reheater REH und anschließend in den Kondensor COND, in dem Wasser in der verdichteten Luft kondensiert wird. Das Wasser wird in dem nachgeschalteten Wasserabscheider WE abgeschieden. Die auf diese Weise entfeuchtete Luft gelangt sodann durch den Reheater REH, wobei sie geringfügig erwärmt wird und sodann in die Turbine T, in der sie entspannt wird und dabei eine erhebliche Temperaturminderung erfährt. Die auf diese Weise gekühlte Luft gelangt sodann durch die kalte Seite des Kondensors COND. Sie wird anschließend einer Mischkammer bzw. der Flugzeugkabine zugeführt.

Wie dies weiter aus Figur 3 hervorgeht, mündet die Bypass-Leitung 20 stromabwärts der Turbine T in die erste Leitung 10 ein.

Mit dem Bezugszeichen 30 sind Temperatursensoren gekennzeichnet, von denen einer stromabwärts des Kondensors COND angeordnet ist. Er mißt aufgrund seiner Anordnung die Temperatur der Mischluft, die aus der durch die Bypass-Leitung 20 geführten Luft und der durch die erste Leitung 10 geführten Luft besteht. Wie in Figur 3 dargestellt, erfolgt die Mischung beider Luftströme zwischen Turbine T und Kondensor COND.

Alternativ oder zusätzlich dazu kann ein weiterer Temperatursensor 30 vorgesehen sein, der, wie dies aus Figur 3 ersichtlich ist, zwischen dem Wasserabscheider WE und dem Reheater REH angeordnet ist. Die Temperatursensoren 30 melden den Temperatur-Ist-Wert an eine Temperatur-Regeleinheit ECU, wie dies durch Pfeile in Figur 3 angedeutet ist.

Wie dies weiter aus Figur 3 hervorgeht, befindet sich in der Bypass-Leitung 20 eine Drosseleinrichtung TCV_H. Wie oben ausgeführt, befindet sich eine weitere Drosseleinrichtung TCV_C in der ersten Leitung 10, in der die Kühleinrichtungen, nämlich im vorliegenden Beispiel der Stauluftwärmetauscher HX und die Turbine T angeordnet sind. Neben den hier dargestellten Kühleinrichtungen können auch weitere Kühleinrichtungen vorgesehen sein, wie beispielsweise ein Vapour Cycle.

Die Funktionsweise der in Figur 3 dargestellten Anordnung gestaltet sich wie folgt:

Meldet der oder die Temperatursensoren 30 einen Temperatur-ist-Wert, der unterhalb eines Temperatur-Soll-Wertes liegt, veranlasst die Temperatur-Regeleinheit ECU eine Vergrößerung des Durchlasses der Drosseleinrichtung bzw. des Drosselventils TCV_H, das in der Bypass-Leitung 20 angeordnet ist, was dazuführt, dass in dem Mischpunkt wärmere Luft zugeführt wird. Die Temperatur-Regeleinheit veranlasst jedoch gleichzeitig, dass die Durchlässigkeit der in der ersten Leitung 10 befindlichen Drosseleinrichtung TCV_C verringert wird, so dass die Druckverhältnisse am Verdichterauslass konstant bzw. weitgehend konstant bleiben. Das Ventil TCV_C hat somit die Aufgabe, einen Druckabfall am Verdichterauslass, der bei vorbekannten Systemen durch Öffnen des Ventils TCV_H hervorgerufen würde, zu verhindern bzw. zu kompensieren, was dadurch erfolgt, dass die Durchlässigkeit durch das Ventil TCV_C entsprechend verringert wird. Der entsprechende umgekehrte Vorgang vollzieht sich, wenn das Ventil TCV_H gedrosselt wird.

Dies führt dazu, dass die Druckverhältnisse am Verdichterauslass weitgehend unabhängig von dem Öffnungszustand bzw. der Durchlässigkeit des Ventils TCV_H, das sich in der Bypass-Leitung 20 befindet, sind. Diese Verhältnisse sind in Figur 2 schematisch dargestellt. Diese Figur zeigt, dass die Durchlässigkeit der Drosseleinrichtungen TCV_H und TCV_C derart zueinander verändert werden, dass der Druck am Verdichterauslass annähernd konstant bleibt.

Damit ist der Druck am Verdichterauslass unabhängig vom Öffnungsgrad des Ventils TCV_H und eine stetige und zuverlässige Temperaturregelung über das Stellglied TCV_H ist möglich.

Wie dies aus Figur 3 weiter hervorgeht, beeinflußt die Temperatur-Regeleinheit ECU auch die Durchlässigkeit des Ventils RAV, das den Massenstrom der in die Staulufwärmetasucher HX strömenden Umgebungs- bzw. Stauluft steuert.

Parallel zu der Regelung der Temperatur ist eine Durchsatzregelung vorgesehen, wie dies ebenfalls in Figur 3 dargestellt ist. Der Ist-Wert des Durchlasses wird durch eine Durchsatz-Messeinrichtung 40, die am Verdichterauslass angeordnet ist, ermittelt. Die Durchsatz-Regeleinheit ECU nimmt einen Vergleich zwischen Soll- und Ist-Wert vor und beeinflußt bei einer Abweichung die Drehzahl des den Verdichter C antreibenden Motors M.

Wie dies weiter aus Figur 3 hervorgehet, bilden der den Verdichter C antreibende Motor, der Verdichter C und die Turbine T eine Air-Cylce-Machine, die auf einer Welle sitzt.

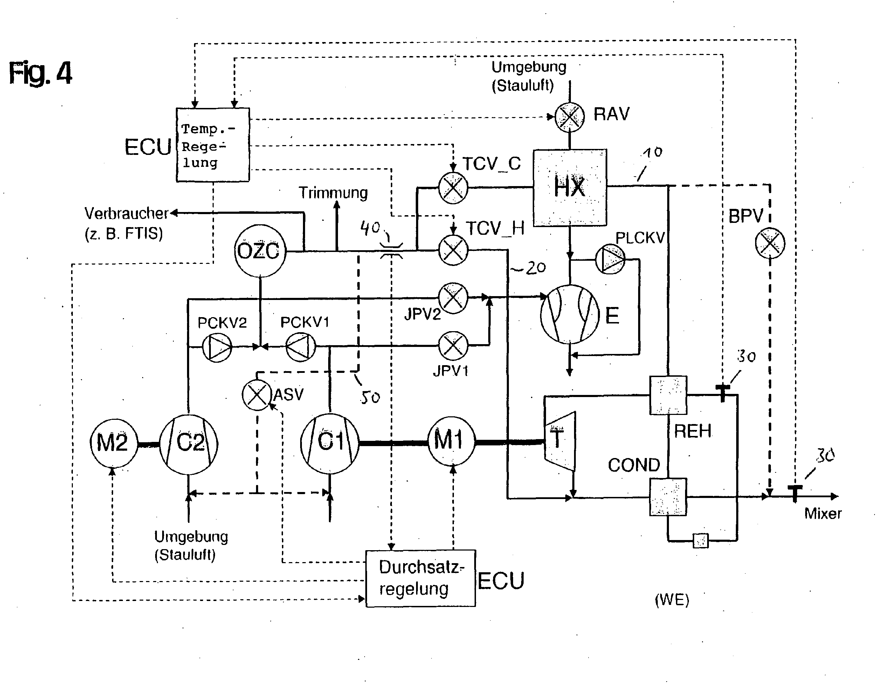

Figur 4 zeigt eine weitere Ausführungsform der erfindungsgemäßen Flugzeugklimaanlage. Wie dies aus Figur 4 hervorgeht, ist ein erster Verdichter C1 vorgesehen, der durch einen ersten Motor M1 angetrieben, wobei der erste Verdichter C1, der erste Motor M1 und die Turbine T eine Air-Cycle-Machine bilden.

Zusätzlich zu dem ersten Verdichter C1 ist ein weiterer mit Umgebungs- oder Stauluft oder vorverdichteter Luft beaufschlagter Verdichter C2 vorgesehen, der durch einen zweiten Motor M2 angetrieben wird. In den Verdichterauslaßleitungen beider Verdichter C1, C2 befinden sich Rückschlagventile PCKV1 und PCKV2. Abschließend werden die beiden Verdichterauslässe zusammengeführt. Die auf diese Weise zusammengeführte Druckluft wird über die Einheit OZC geführt, bei der es sich um einen Konverter für Ozon und/oder für Kohlenwasserstoffe handelt. Mittels des Sensors 40 wird der Durchsatz der verdichteten Luft erfaßt und zur Durchsatzregelung mittels der Einheit ECU herangezogen, die bei einer Soll-Wert-Abweichung die Drehzahl des Motors M1 ändert. Wie dies bereits zu Figur 3 erläutert wurde, zweigt von der ersten Leitung 10, in der die Kühleinrichtungen in Form des Stauluftwärmetauschers HX sowie der Turbine T angeordnet sind, eine Bypass-Leitung 20 ab, die auf der Auslaßseite der Turbine T in die erste Leitung 10 mündet. Hinsichtlich der Anordnung und Funktion der Drosseleinrichtungen TCV_H und TCV_C wird auf die Ausführungen zu Figur 3 Bezug genommen.

Wie dies weiter aus Figur 4 hervorgeht, befindet sich im Stauluftkanal eine Jet Pump E, die über die Jet Pump Modulating Valves JPV1 und JPV2 mit Druckluft versorgt wird und die die Funktion hat, eine Luftbewegung durch den Stauluftkanal zu bewirken. Die Jet Pump Modulating Valves JPV1 und JPV2 werden mit Verdichterdruckluft beaufschlagt. Der Stauluftkanal weist zwei parallel verlaufende KanalAbschnitte auf, von denen in einem die Jet Pump E angeordnet ist. In dem anderen, parallel verlaufenden Kanal befindet sich das Rückschlagventil PLCKV. Dieser Kanal wird im Flugbetrieb von Stauluft durchströmt. Das Rückschlagventil PLCKV hat die Aufgabe, eine Kreislaufströmung im Stauluftkanal zu verhindern.

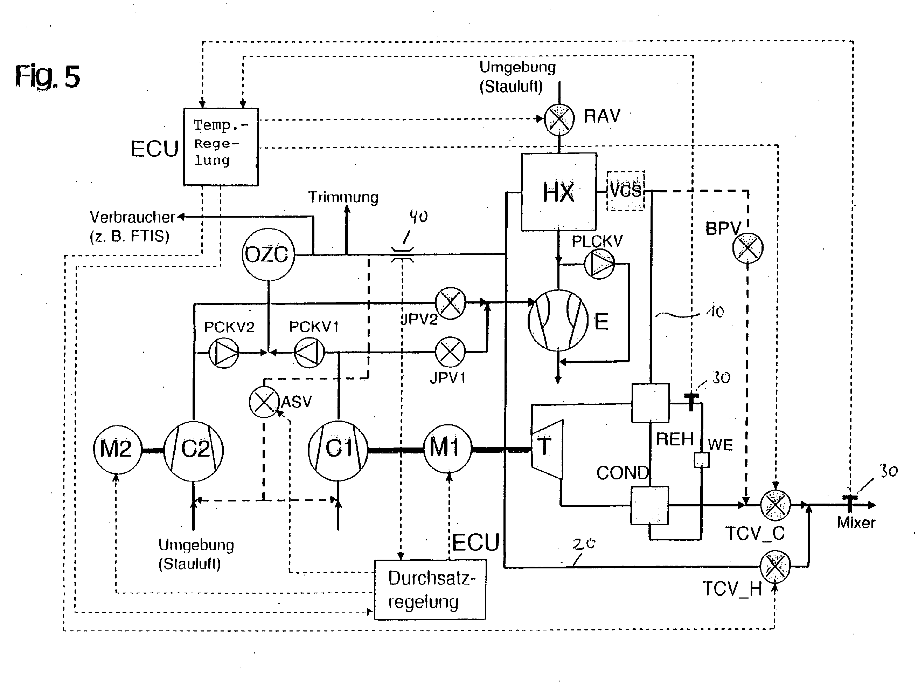

Zusätzlich zu der in Figur 3 dargestellten Anordnung weist die Flugzeugklimaanlage gemäß Figur 4 eine weitere Bypass-Leitung auf, die stromabwärts des Stauluftwärmetauschers HX von der ersten Leitung 10 abzweigt und die stromabwärts des Mischpunktes zwischen Bypass-Leitung 20 und erster Leitung 10 mündet, wie dies aus Figur 4 hervorgeht. In dieser Leitung befindet sich das verstellbare Bypass-Ventil BPV. Die das Ventil BPV aufweisende Bypass-Leitung kann auch an anderer Stelle einmünden. Denkbar ist beispielsweise, dass die Bypass-Leitung stromaufwärts des Mischpunktes zwischen Bypass-Leitung 20 und erster Leitung 10 mündet, wie dies aus Figur 5 hervorgeht.

Wie dies ebenfalls aus Figur 4 hervorgeht, ist eine Leitung 50 vorgesehen, die die gemeinsame Druckleitung der Verdichter C1 und C2 mit den Verdichtereinlässen verbindet. In dieser Leitung 50 befindet sich ein Ventil ASV (anti surge valve), das im geöffneten Zustand die Verdichterdruckseite mit der Verdichtersaugseite verbindet. Dabei ist vorgesehen, dass für zwei Verdichter C1, C2 nur ein anti surge valve bzw. eine Leitung 50 vorgesehen ist, die stromabwärts des Ventils ASV sich zu beiden Verdichtereinlässen teilt. Das Ventil ASV wird durch die Durchsatz-Regeleinheit angesteuert. Das Ventil ASV wird zur Vermeidung von surge eingesetzt und dient ebenfalls dazu, die Temperatur der Verdichterauslaßluft auf einen gewünschten Wert einzustellen. Dazu wird die Temperatur der Verdichterauslaßluft gemessen, in einer Regeleinheit mit einem Soll-Wert verglichen. Wird eine Regelabweichung festgestellt, wird die Durchlässigkeit des Ventils ASV verändert und somit eine größere oder kleinere Menge von heißer Luft an die Verdichtereinlässe geführt. Auf diese Weise ist die Temperatur der Verdichterauslaßluft regelbar.

Figur 5 zeigt eine weitere Anordnung der erfindungsgemäßen Flugzeugklimaanlage, die sich von der gemäß Figur 4 durch die Anordnung der Drosseleinrichtungen unterscheidet. Wie dies aus Figur 5 hervorgeht, befinden sich beide Drosseleinrichtungen TCV_C, TCV_H unmittelbar vor dem Mischpunkt, an dem die Bypass-Leitung 20 in die erste Leitung 10 einmündet. In dem hier dargestellten Ausführungsbeispiel ist somit die sich in der ersten Leitung 10 befindliche Drosseleinrichtung TCV_C stromabwärts der Wasserabscheideeinrichtung, d. h. in diesem Fall stromabwärts der kalten Seite des Kondensors COND angeordnet.

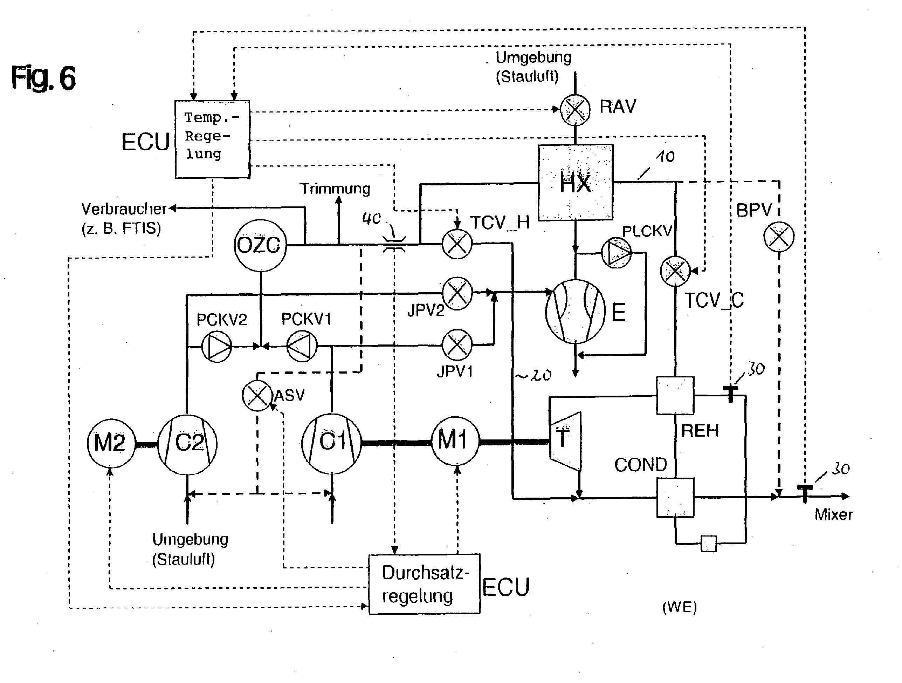

Bei der aus Figur 6 ersichtlichen Anordnung befindet sich die in der ersten Leitung 10 angeordnete Drosseleinrichtung TCV_C in dem Abschnitt zwischen dem Stauluft-Wärmetauscher HX und dem Wasserabscheidekreislauf, d. h. stromaufwärts des Reheaters REH.

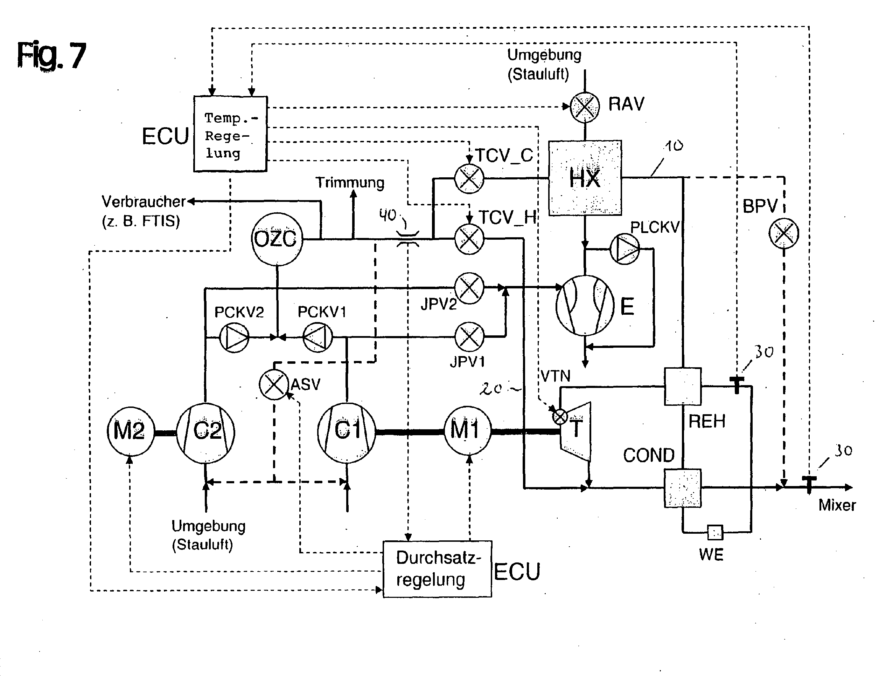

Figur 7 zeigt schließlich eine Anordnung, bei der in der ersten Leitung 10 zusätzlich zu der Drosseleinrichtung TCV_C eine Turbinennozzle VTN vorgesehen ist. Zusätzlich zu der Drosseleinrichtung TCV_C oder alternativ dazu kann die Turbinennozzle VTN die gewünschte erfindungsgemäße Änderung des Durchlasses bzw. Massenstroms in der ersten Leitung 10 bewirken.

## Patentansprüche

1. Flugzeugklimaanlage mit wenigstens einem Verdichter (C), mit einer ersten Leitung (10), die mit der Druckseite des Verdichters (C) in Verbindung steht und in der eine oder mehrere dem Verdichter (C) nachgeschaltete Kühleinrichtungen zur Kühlung der in dem Verdichter (C) komprimierten Luft angeordnet sind, sowie mit einer zweiten, als Bypassleitung (20) ausgeführten Leitung, die ebenfalls mit der Druckseite des Verdichters (C) in Verbindung steht und die derart angeordnet ist, dass sie wenigstens einen Teil der in dem Verdichter (C) komprimierten Luft im Bypass um wenigstens eine der Kühleinrichtungen führt, wobei in der Bypassleitung (20) eine Drosseleinrichtung (TCV_H) angeordnet ist, mittels derer der Massenstrom der durch die Bypassleitung (20) geführten Luft variierbar ist, wobei in der ersten Leitung (10) eine Drosseleinrichtung (TCV_C, VTN) angeordnet ist, mittels derer der Massenstrom der durch die erste Leitung (10) geführten Luft variierbar ist, und dass eine Einheit (ECU) vorgesehen ist, die derart ausgeführt ist, dass sie in einem ersten Betriebsmodus betreibbar ist, in dem beim Vergrößern des Durchlasses der in der Bypassleitung (20) befindlichen Drosseleinrichtung (TCV_H) eine Verringerung des Durchlasses der in der ersten Leitung (10) befindlichen Drosseleinrichtung (TCV_C, VTN) bewirkt und umgekehrt beim Verringern des Durchlasses der in der Bypassleitung (20) befindlichen Drosseleinrichtung (TCV_H) eine Vergrößerung des Durchlasses der in der ersten Leitung (10) befindlichen Drosseleinrichtung (TCV_C, VTN) bewirkt,
**dadurch gekennzeichnet, dass** die Einheit (ECU) sowohl in den ersten als auch in einem zweiten Betriebsmodus betriebbar ist,
in dem eine Vergrößerung des Durchlasses der in der Bypassleitung (20) befindlichen Drosseleinrichtung (TCV_H) und der in der ersten Leitung (10) befindlichen Drosseleinrichtung (TCV_C, VTN) oder eine Verringerung des Durchlasses der in der Bypassleitung (20) befindlichen Drosseleinrichtung (TCV _H) und der in der ersten Leitung (10) befindlichen Drosseleinrichtung (TCV_C, VTN) bewirkt.

2. Flugzeugklimaanlage nach Anspruch 1, **dadurch gekennzeichnet, dass** die Einheit (ECU) derart ausgeführt ist, dass die Veränderung der Durchlässe der Drosseleinrichtungen (TCV_C, TCV_H) derart erfolgt, dass der Druck am Verdichterauslass bei der Veränderung der Durchlässe konstant bleibt.

3. Flugzeugklimaanlage nach Anspruch 1 oder 2, **dadurch gekennzeichnet, dass** der Verdichter (C) derart angeordnet ist, dass er mit Umgebungs- oder Stauluft oder mit vorverdichteter Luft beaufschlagt wird.

4. Flugzeugklimaanlage nach einem der vorhergehenden Ansprüche, **dadurch gekennzeichnet, dass** die Einheit (ECU) als in dem ersten Betriebsmodus arbeitende Temperatur-Regelungseinheit ausgeführt ist und dass ein oder mehrere mit der Temperatur-Regelungseinheit in Verbindung stehende Temperatursensoren (30) vorgesehen sind, die die Temperatur der Luft in der Flugzeugklimaanlage messen, wobei die Temperatur-Regelungseinheit derart ausgeführt ist, dass sie bei Feststellung einer Abweichung zwischen dem mittels des oder der Temperatursensoren (30) gemessenen Temperatur-Istwert und einem vorgegebenen Temperatur-Sollwert den Durchlass der in der Bypassleitung (20) befindlichen Drosseleinrichtung (TCV_H) zum Zwecke der Verringerung der Regelabweichung variiert.

5. Flugzeugklimaanlage nach Anspruch 4, **dadurch gekennzeichnet, dass** die Bypassleitung (20) in die erste Leitung (10) einmündet und dass der eine oder die mehreren Temperatursensoren (30) in der ersten Leitung (10) vor und/oder nach der Mündungsstelle der Bypassleitung (20) in die erste Leitung (10) angeordnet sind.

6. Flugzeugklimaanlage nach einem der vorhergehenden Ansprüche, **dadurch gekennzeichnet, dass** die in der ersten Leitung (10) befindlichen Kühleinrichtungen durch einen durch mit Stau- oder Umgebungsluft gekühlten Wärmetauscher (HX) und/oder durch einen Vapour Cycle und/oder durch eine Turbine (T) zur Entspannung von in dem Verdichter (C) komprimierter Luft gebildet werden.

7. Flugzeugklimaanlage nach einem der vorhergehenden Ansprüche, **dadurch gekennzeichnet, dass** in der ersten Leitung (10) eine Turbine (T) zur Entspannung von in dem Verdichter (C) komprimierter Luft und ein der Turbine (T) vorgeschalteter Wasserabscheidekreislauf angeordnet ist.

8. Flugzeugklimaanlage nach einem der vorhergehenden Ansprüche, **dadurch gekennzeichnet, dass** in der ersten Leitung (10) eine Turbine (T) zur Entspannung von in dem Verdichter (C) komprimierter Luft angeordnet ist und dass die Turbine (T) mit dem Verdichter (C) auf einer Welle sitzt.

9. Flugzeugklimaanlage nach einem der vorhergehenden Ansprüche, **dadurch gekennzeichnet, dass** wenigstens ein mit dem Verdichter (C) in Verbindung stehender Motor (M) zum Antrieb des Verdichters (C) vorgesehen ist.

10. Flugzeugklimaanlage nach Anspruch 8 und 9, **dadurch gekennzeichnet, dass** der Verdichter (C), die Turbine (T) und der Motor (M) auf einer Welle sitzen.

11. Flugzeugklimaanlage nach einem der vorhergehenden Ansprüche, **dadurch gekennzeichnet, dass** der Verdichter (C) ein- oder mehrstufig ausgeführt ist.

12. Flugzeugklimaanlage nach einem der vorhergehenden Ansprüche, **dadurch gekennzeichnet, dass** der Verdichter (C) durch mehrere Verdichtereinheiten gebildet wird, die einstufig oder mehrstufig ausgeführt sind und getrennt hintereinander angeordnet sind oder durch eine Welle miteinander verbunden sind.

13. Flugzeugklimaanlage nach Anspruch 11 oder 12, **dadurch gekennzeichnet, dass** zwischen den Verdichtereinheiten oder zwischen den Stufen des mehrstufigen Verdichters (C) eine oder mehrere Zwischenkühleinrichtungen vorgesehen sind.

14. Flugzeugklimaanlage nach einem der vorhergehenden Ansprüche, **dadurch gekennzeichnet, dass** außer dem Verdichter (C) einer oder mehrere weitere durch einen Motor angetriebene Verdichter vorgesehen sind, die unabhängig von dem Verdichter (C) parallel zu diesem betreibbar sind.

15. Flugzeugklimaanlage nach einem der vorhergehenden Ansprüche, **dadurch gekennzeichnet, dass** die in der Bypassleitung (20) befindliche Drosseleinrichtung (TCV_H) und die in der ersten Leitung (10) befindliche Drosseleinrichtung (TCV_C) als getrennte Bauelemente ausgeführt sind oder durch eine gemeinsame Baugruppe gebildet werden.

16. Flugzeugklimaanlage nach einem der vorhergehenden Ansprüche, **dadurch gekennzeichnet, dass** eine Massenstrom-Regeleinheit (ECU) zur Regelung des Massenstroms durch die Flugzeugklimaanlage vorgesehen ist, dass ein oder mehrere mit der Massenstrom-Regeleinheit in Verbindung stehende Durchsatzmesseinrichtungen (40) sowie Stellglieder vorgesehen sind, mittels derer der Massenstrom variierbar ist.

17. Flugzeugklimaanlage nach Anspruch 16, **dadurch gekennzeichnet, dass** das oder die Stellglieder durch Mittel zur Verstellung der Drehzahl eines den Verdichter (C) antreibenden Motors (M) gebildet werden.

18. Flugzeugklimaanlage nach Anspruch 16 oder 17, **dadurch gekennzeichnet, dass** die Massenstrom-Regeleinheit (ECU) und die Temperatur-Regeleinheit (ECU) durch unterschiedliche Bauelemente oder durch einen Controller gebildet werden.

19. Flugzeugklimaanlage nach einem der vorhergehenden Ansprüche, **dadurch gekennzeichnet, dass** die Flugzeugklimaanlage eine Turbine (T) zur Entspannung der in dem Verdichter (C) komprimierten Luft aufweist und dass die Bypassleitung (20) stromabwärts der Turbine (T) in die erste Leitung (10) mündet.

20. Flugzeugklimaanlage nach einem der vorhergehenden Ansprüche, **dadurch gekennzeichnet, dass** die Flugzeugklimaanlage eine Turbine (T) zur Entspannung der in dem Verdichter (C) komprimierten Luft sowie einen Kondensor (COND) aufweist, der der Turbine (T) derart nachgeschaltet ist, dass die Turbinenauslassluft die kalte Seite des Kondensors (COND) durchströmt und dass die Bypassleitung (20) stromabwärts des Kondensors (COND) in die erste Leitung (10) mündet.

21. Flugzeugklimaanlage nach einem der vorhergehenden Ansprüche, **dadurch gekennzeichnet, dass** in der ersten Leitung (10) ein Stauluftwärmetauscher (HX) sowie ein Wasserabscheidekreislauf angeordnet ist und dass die in der ersten Leitung (10) angeordnete Drosseleinrichtung (TCV_C) dem Stauluftwärmetauscher (HX) vorgeschaltet ist, zwischen dem Stauluftwärmetauscher (HX) und dem Wasserabscheidekreislauf angeordnet ist oder dem Wasserabscheidekreislauf nachgeschaltet ist.

22. Flugzeugklimaanlage nach einem der vorhergehenden Ansprüche, **dadurch gekennzeichnet, dass** eine Verbindungsleitung (50) vorgesehen ist, die den Auslass des/der Verdichter (C) mit dessen/deren Einlass verbindet und dass in der Verbindungsleitung (50) ein Ventil (ASV) angeordnet ist, mittels dessen der Massenstrom der durch die Verbindungsleitung (50) strömenden Luft veränderbar ist.

23. Flugzeugklimaanlage nach Anspruch 22, **dadurch gekennzeichnet, dass** eine Regelungseinheit zur Regelung der Temperatur der Verdichterauslassluft vorgesehen ist, die mit einem Temperatursensor zur Messung der Temperatur der Verdichterausslassluft sowie mit dem Ventil (ASV) in Verbindung steht.

24. Flugzeugklimaanlage nach einem der vorhergehenden Ansprüche, **dadurch gekennzeichnet, dass** eine variable Turbinendüse vorgesehen ist und dass die in der ersten Leitung (10) befindliche Drosseleinrichtung (TCV_C, VTN) ausschließlich oder auch durch die variable Turbinendüse (VTN) gebildet wird.

25. Verfahren zum Betreiben einer Flugzeugklimaanlage, insbesondere einer Flugzeugklimaanlage gemäß einem der Ansprüche 1 bis 24, mit einem Verdichter (C), mit einer ersten Leitung (10), die mit der Druckseite des Verdichters (C) in Verbindung steht und in der eine oder mehrere dem Verdichter (C) nachgeschaltete Kühleinrichtungen zur Kühlung der in dem Verdichter (C) komprimierten Luft angeordnet sind, sowie mit einer zweiten, als Bypassleitung (20) ausgeführten Leitung, die ebenfalls mit der Druckseite des Verdichters (C) in Verbindung steht und die derart angeordnet ist, dass sie wenigstens einen Teil der in dem Verdichter (C) komprimierten Luft im Bypass um wenigstens eine der Kühleinrichtungen führt, wobei in der Bypassleitung (20) eine Drosseleinrichtung (TCV_H) angeordnet ist, mittels derer der Massenstrom der durch die Bypass-leitung (20) geführten Luft variierbar ist,
wobei in der ersten Leitung (10) eine Drosseleinrichtung (TCV_C, VTN) angeordnet ist, mittels derer der Massenstrom der durch die erste Leitung (10) geführten Luft variierbar ist, und dass in einem ersten Betriebsmodus beim Vergrößern des Durchlasses der in der Bypassleitung (20) befindlichen Drosseleinrichtung (TCV_H) eine Verringerung des Durchlasses der in der ersten Leitung (10) befindlichen Drosseleinrichtung (TCV_C, VTN) erfolgt und umgekehrt beim Verringern des Durchlasses der in der Bypassleitung (20) befindlichen Drosseleinrichtung (TCV_H) eine Vergrößerung des Durchlasses der in der ersten Leitung (10) befindlichen Drosseleinrichtung (TCV_C, VTN) erfolgt
**dadurch gekennzeichnet, dass** in einem zweiten Betriebsmodus beim Vergrößern des Durchlasses der in der Bypassleitung (20) befindlichen Drosseleinrichtung (TCV_H) eine Vergrößerung des Durchlasses der in der ersten Leitung (10) befindlichen Drosseleinrichtung (TCV_C, VTN) erfolgt und beim Verringern des Durchlasses der in der Bypassleitung (20) befindlichen Drosseleinrichtung (TCV_H) eine Verringerung des Durchlasses der in der ersten Leitung (10) befindlichen Drosseleinrichtung (TCV_C, VTN) erfolgt,
wobei die Flugzeugklimaanlage sowohl in dem ersten als auch in dem zweiten Betriebsmodus betrieben werden kann.

26. Verfahren nach Anspruch 25, **dadurch gekennzeichnet, dass** die Durchlässe der Drosseleinrichtungen (TCV_C, TCV_H) derart geändert werden, dass der Druck am Verdichterauslass durch die Änderungen der Durchlässe der Drosseleinrichtungen (TCV_C, TCV_H) nicht verändert wird.

27. Verfahren nach Anspruch 25 oder 26, **dadurch gekennzeichnet, dass** die Temperatur der durch die Flugzeugklimaanlage strömenden Luft gemessen und mit einem Sollwert verglichen wird und dass bei einer Abweichung zwischen Soll- und Istwert zum Zwecke der Temperaturregelung eine Änderung des Durchlasses der in der Bypassleitung (20) befindlichen Drosseleinrichtung (TCV_H) vorgenommen wird.

28. Verfahren nach Anspruch 27, **dadurch gekennzeichnet, dass** die Bypassleitung (20) in die erste Leitung (10) an einer Mündungsstelle einmündet und dass die Temperaturmessung stromabwärts oder stromaufwärts der Mündungsstelle vorgenommen wird.

29. Verfahren nach Anspruch 27 oder 28, **dadurch gekennzeichnet, dass** die Flugzeugklimaanlage einen einen Reheater (REH), Kondensor (COND), und Wasserabscheider (WE) aufweisenden Wasserabscheidekreislauf aufweist und dass die Temperaturmessung zwischen dem Kondensor (COND) und dem Reheater (REH) erfolgt.

30. Verfahren nach einem der Ansprüche 25 bis 29, **dadurch gekennzeichnet, dass** die Temperatur der Luft am Verdichterauslass **dadurch** verändert wird, dass der Verdichterauslass mit dem Verdichtereinlass durch Öffnen eines Ventils (ASV) verbunden wird.

31. Verfahren nach Anspruch 30, **dadurch gekennzeichnet, dass** die Temperatur der Luft am Verdichterauslass mittels einer Regeleinheit geregelt wird.

32. Verfahren nach einem der Ansprüche 25 bis 31, **dadurch gekennzeichnet, dass** unabhängig von der Temperatur-Regelung eine Regelung des Massenstroms der Verdichterauslassluft erfolgt.

33. Verfahren nach einem der Ansprüche 25 bis 32, **dadurch gekennzeichnet, dass** sich in der ersten Leitung (10) eine variable Turbinendüse (VTN) befindet, die die Drosseleinrichtung bildet.

34. Verfahren nach einem der Ansprüche 25 bis 33, **dadurch gekennzeichnet, dass** sich in der ersten Leitung (10) mehrere Drosseleinrichtungen (TCV_C, VTN) befinden und das eine von diesen Drosseleinrichtungen durch eine variable Turbinendüse (VTN) gebildet wird.

## Claims

1. Aircraft air-conditioning system with at least one compressor (C), with a first line (10) which is connected to the delivery side of the compressor (C) and in which one or more cooling devices, following the compressor (C), for cooling the air compressed in the compressor (C) are arranged, and also with a second line which is designed as a bypass line (20) and which is likewise connected to the delivery side of the compressor (C) and is arranged in such a way that it routes at least part of the air compressed in the compressor (C), in the bypass, around at least one of the cooling devices, the bypass line (20) having arranged in it a throttle device (TCV_H), by means of which the mass flow of the air routed through the bypass line (20) can be varied, the first line (10) having arranged in it a throttle device (TCV_C, VTN), by means of which the mass flow of the air routed through the first line (10) can be varied, and a unit (ECU) being provided, which is designed in such a way that it can be operated in a first operating mode in which, when the passage of the throttle device (TCV_H) located in the bypass line (20) is enlarged, the said unit causes a reduction in the passage of the throttle device (TCV_C, VTN) located in the first line (10), and, conversely, it causes an enlargement of the passage of the throttle device (TCV_C, VTN) located in the first line (10) when the passage of the throttle device (TCV_H) located in the bypass line (20) is reduced, **characterized in that** the unit (ECU) can be operated both in the first operating mode and in a second operating mode in which it causes an enlargement of the passage of the throttle device (TCV_H) located in the bypass line (20) and of the throttle device (TCV_C, VTN) located in the first line (10) or a reduction of the passage of the throttle device (TCV_H) located in the bypass line (20) and of the throttle device (TCV_C, VTN) located in the first line (10).

2. Aircraft air-conditioning system according to Claim 1, **characterized in that** the unit (ECU) is designed in such a way that the variation of the passages in the throttle devices (TCV_C, TCV_H) takes place in such a way that the pressure at the compressor outlet remains constant during the variation of the passages.

3. Aircraft air-conditioning system according to Claim 1 or 2, **characterized in that** the compressor (C) is arranged in such a way that it is acted upon with ambient or ram air or with precompressed air.

4. Aircraft air-conditioning system according to one of the preceding claims, **characterized in that** the unit (ECU) is designed as a temperature regulating unit operating in the first operating mode, and **in that** one or more temperature sensors (30) are provided which are connected to the temperature regulation unit and which measure the temperature of the air in the aircraft air-conditioning system, the temperature regulation unit being designed in such a way that, when a deviation between the temperature actual value measured by means of the temperature sensor or temperatures sensors (30) and a predetermined temperature desired value is detected, it varies the passage of the throttle device (TCV_H) located in the bypass line (20) for the purpose of reducing the control deviation.

5. Aircraft air-conditioning system according to claim 4, **characterized in that** the bypass line (20) issues into the first line (10), and **in that** the one or more temperature sensors (30) is/are arranged in the first line (10) upstream and/or downstream of the point of issue of the bypass line (20) into the first line (10).

6. Aircraft air-conditioning system according to one of the preceding claims, **characterized in that** the cooling devices located in the first line (10) are formed by a heat exchanger (HX) cooled by the ram air or ambient air and/or by a vapour cycle and/or by a turbine (T) for the expansion of air compressed in the compressor (C).

7. Aircraft air-conditioning system according to one of the preceding claims, **characterized in that** a turbine (T) for the expansion of air compressed in the compressor (C) and a water separation circuit preceding the turbine (T) are arranged in the first line (10).

8. Aircraft air-conditioning system according to one of the preceding claims, **characterized in that** a turbine (T) for the expansion of air compressed in the compressor (C) is arranged in the first line (10), and **in that** the turbine (T) is seated together with the compressor (C) on one shaft.

9. Aircraft air-conditioning system according to one of the preceding claims, **characterized in that** at least one motor (M) connected to the compressor (C) is provided for driving the compressor (C).

10. Aircraft air-conditioning system according to Claims 8 and 9, **characterized in that** the compressor (C), the turbine (T) and the motor (M) are seated on one shaft.

11. Aircraft air-conditioning system according to one of the preceding claims, **characterized in that** the compressor (C) is of single-stage or multi-stage design.

12. Aircraft air-conditioning system according to one of the preceding claims, **characterized in that** the compressor (C) is formed by a plurality of compressor units which are of single-stage or multi-stage design and are arranged separately one behind the other or are connected to one another by means of a shaft.

13. Aircraft air-conditioning system according to claim 11 or 12, **characterized in that** one or more intermediate cooling devices are provided between the compressor units or between the stages of the multi-stage compressor (C).

14. Aircraft air-conditioning system according to one of the preceding claims, **characterized in that**, in addition to the compressor (C), one or more further compressors driven by a motor are provided, which can be operated independently of the compressor (C) in parallel with the latter.

15. Aircraft air-conditioning system according to one of the preceding claims, **characterized in that** the throttle device (TCV_H) located in the bypass line (20) and the throttle device (TCV_C) located in the first line (10) are designed as separate structural elements or are formed by one common subassembly.

16. Aircraft air-conditioning system according to one of the preceding claims, **characterized in that** a mass flow control unit (ECU) for regulating the mass flow through the aircraft air-conditioning system is provided, and **in that** one or more throughput measurement devices (40), connected to the mass flow control unit, and also actuating members, by means of which the mass flow can be varied, are provided.

17. Aircraft air-conditioning system according to Claim 16, **characterized in that** the actuating member or actuating members is or are formed by means for adjusting the rotational speed of a motor (M) driving the compressor (C).

18. Aircraft air-conditioning system according to Claim 16 or 17, **characterized in that** the mass flow control unit (ECU) and the temperature regulation unit (ECU) are formed by different structural elements or by one controller.

19. Aircraft air-conditioning system according to one of the preceding claims, **characterized in that** the aircraft air-conditioning system has a turbine (T) for the expansion of air compressed in the compressor (C), and **in that** the bypass line (20) issues into the first line (10) downstream of the turbine (T).

20. Aircraft air-conditioning system according to one of the preceding claims, **characterized in that** the aircraft air-conditioning system has a turbine (T) for the expansion of air compressed in the compressor (C) and also a condenser (COND) which follows the turbine (T) in such a way that the turbine outlet air flows through the cold side of the condenser (COND), and **in that** the bypass line (20) issues into the first line (10) downstream of the condenser (COND).

21. Aircraft air-conditioning system according to one of the preceding claims, **characterized in that** a ram-air heat exchanger (HX) and a water separation circuit are arranged in the first line (10), and **in that** the throttle device (TCV_C) arranged in the first line (10) precedes the ram-air heat exchanger (HX), is arranged between the ram-air heat exchanger (HX) and the water separation circuit or follows the water separation circuit.

22. Aircraft air-conditioning system according to one of the preceding claims, **characterized in that** a connecting line (50) is provided, which connects the outlet of the compressor or compressors (C) to its or their inlet, and **in that** the connecting line (50) has arranged in it a valve (ASV), by means of which the mass flow of air flowing through the connecting line (50) can be varied.

23. Aircraft air-conditioning system according to Claim 22, **characterized in that** a regulation unit for regulating the temperature of the compressor outlet air is provided, which is connected to a temperature sensor for measuring the temperature of the compressor outlet air and also to the valve (ASV).

24. Aircraft air-conditioning system according to one of the preceding claims, **characterized in that** a variable turbine nozzle is provided, and **in that** the throttle device (TCV_C, VTN) located in the first line (10) is formed solely or also by the variable turbine nozzle (VTN).

25. Method for operating an aircraft air-conditioning system, in particular an aircraft air-conditioning system according to one of Claims 1 to 24, with a compressor (C), with a first line (10) which is connected to the delivery side of the compressor (C) and in which one or more cooling devices, following the compressor (C), for cooling the air compressed in the compressor (C) are arranged, and also with a second line which is designed as a bypass line (20) and which is likewise connected to the delivery side of the compressor (C) and is arranged in such a way that it routes at least part of the air compressed in the compressor (C), in the bypass, around at least one of the cooling devices, the bypass line (20) having arranged in it a throttle device (TCV_H), by means of which the mass flow of the air routed through the bypass line (20) can be varied, the first line (10) having arranged in it a throttle device (TCV_C, VTN), by means of which the mass flow of the air routed through the first line (10) can be varied, and, in a first operating mode, when the passage of the throttle device (TCV_H) located in the bypass line (20) is enlarged, a reduction of the passage of the throttle device (TCV_C, VTN) located in the first line (10) taking place, and, conversely, when the passage of the throttle device (TCV_H) located in the bypass line (20) is reduced, an enlargement of the passage of the throttle device (TCV_C, VTN) located in the first line (10) taking place, **characterized in that**, in a second operating mode, when the passage of the throttle device (TCV_H) located in the bypass line (20) is enlarged, an enlargement of the passage of the throttle device (TCV_C, VTN) located in the first line (10) takes place, and, when the passage of the throttle device (TCV_H) located in the bypass line (20) is reduced, a reduction of the passage of the throttle device (TCV_C, VTN) located in the first line (10) takes place, the aircraft air-conditioning system being capable of being operated both in the first and in the second operating mode.

26. Method according to Claim 25, **characterized in that** the passages of the throttle devices (TCV_C, TCV_H) are changed in such a way that the pressure at the compressor outlet is not varied due to the changes in the passages of the throttle devices (TCV_C, TCV_H).

27. Method according to Claim 25 or 26, **characterized in that** the temperature of the air flowing through the aircraft air-conditioning system is measured and is compared with a desired value, and **in that**, in the event of a deviation between the desired and the actual value, a change in the passage of the throttle device (TCV_H) located in the bypass line (20) is carried out for the purpose of temperature regulation.

28. Method according to Claim 27, **characterized in that** the bypass line (20) issues into the first line (10) at a point of issue, and **in that** the temperature measurement is carried out downstream or upstream of the point of issue.

29. Method according to Claim 27 or 28, **characterized in that** the aircraft air-conditioning system has a water separation circuit having a reheater (REH), a condenser (COND) and a water separator (WE), and **in that** the temperature measurement takes place between the condenser (COND) and the reheater (REH).

30. Method according to one of Claims 25 to 29, **characterized in that** the temperature of the air at the compressor outlet is varied by virtue of the fact that the compressor outlet is connected to the compressor inlet by means of the opening of a valve (ASV).

31. Method according to Claim 30, **characterized in that** the temperature of the air at the compressor outlet is regulated by means of a regulation unit.

32. Method according to one of Claims 25 to 31, **characterized in that** a regulation of the mass flow of the compressor outlet air takes place independently of the temperature regulation.

33. Method according to one of Claims 25 to 32, **characterized in that** a variable turbine nozzle (VTN) which forms the throttle device is located in the first line (10).

34. Method according to one of Claims 25 to 33, **characterized in that** a plurality of throttle devices (TCV_C, VTN) are located in the first line (10), and **in that** one of these throttle devices is formed by a variable turbine nozzle (VTN).

## Revendications

1. Système de climatisation pour avion, avec au moins un compresseur (C), avec une première conduite (10), qui est reliée au côté pression du compresseur (C) et dans laquelle sont disposés un ou plusieurs dispositifs de refroidissement, montés en aval du compresseur (C) et destinés à refroidir l'air comprimé dans le compresseur (C), ainsi qu'avec une deuxième conduite réalisée sous forme de by-pass (20), qui est également relié au côté pression du compresseur (C) et est disposé de telle sorte qu'il guide au moins une partie de l'air, comprimé dans le compresseur (C), dans le by-pass autour d'au moins un des dispositifs de refroidissement, sachant que dans le by-pass (20) est monté un dispositif d'étranglement (TCV_H), au moyen duquel il est possible de faire varier le débit massique de l'air guidé à travers le by-pass (20), sachant que dans la première conduite (10) est disposé un dispositif d'étranglement (TCV_C, VTN), au moyen duquel il est possible de faire varier le débit massique de l'air guidé à travers la première conduite (10), et sachant qu'il est prévu une unité (ECU) qui est réalisée de telle sorte qu'elle peut fonctionner dans un premier mode de service, dans lequel, en cas d'agrandissement du passage du dispositif d'étranglement (TCV_H) situé dans le by-pass (20), il se produit une diminution du passage du dispositif d'étranglement (TCV_C, VTN) situé dans la première conduite (10), et inversement, en cas de diminution du passage du dispositif d'étranglement (TCV_H) situé dans le by-pass (20), il se produit un agrandissement du passage du dispositif d'étranglement (TCV_C, VTN) situé dans la première conduite (10),
**caractérisé en ce que** l'unité (ECU) peut fonctionner tant dans le premier mode de service que dans un deuxième mode de service, dans lequel sont induits un agrandissement du passage du dispositif d'étranglement (TCV_H) situé dans le by-pass (20) et du dispositif d'étranglement (TCV_C, VTN) situé dans la première conduite (10), ou une diminution du passage du dispositif d'étranglement (TCV_H) situé dans le by-pass (20) et du dispositif d'étranglement (TCV_C, VTN) situé dans la première conduite (10).

2. Système de climatisation pour avion selon la revendication 1, **caractérisé en ce que** l'unité (ECU) est réalisée de telle sorte que la variation des passages des dispositifs d'étranglement (TCV_C, TCV_H) est produite de telle sorte que la pression au niveau de la sortie du compresseur reste constante lors de la variation des passages.

3. Système de climatisation pour avion selon la revendication 1 ou 2, **caractérisé en ce que** le compresseur (C) est disposé de telle sorte qu'il est sollicité par l'air ambiant ou l'air dynamique ou par l'air comprimé préalablement.

4. Système de climatisation pour avion selon l'une quelconque des revendications précédentes, **caractérisé en ce que** l'unité (ECU) est réalisée sous la forme d'un régulateur de température fonctionnant dans le premier mode de service et **en ce qu'**il est prévu un ou plusieurs capteurs de température (30), qui sont reliés au régulateur de température et qui mesurent la température de l'air dans le système de climatisation de l'avion, sachant que le régulateur de température est conçu de telle sorte qu'en cas de constatation d'une divergence entre la valeur réelle de la température, mesurée par le ou les capteurs de température (30), et une valeur de consigne prédéfinie pour la température, il fait varier le passage du dispositif d'étranglement (TCV_H), situé dans le by-pass (20), afin de diminuer l'erreur de réglage.

5. Système de climatisation pour avion selon la revendication 4, **caractérisé en ce que** le by-pass (20) débouche dans la première conduite (10) et **en ce que** le ou la pluralité de capteurs de température (30) dans la première conduite (10) sont disposés en amont et/ou en aval de l'embouchure du by-pass (20) dans la première conduite (10).

6. Système de climatisation pour avion selon l'une quelconque des revendications précédentes, **caractérisé en ce que** les dispositifs de refroidissement situés dans la première conduite (10) sont formés par un échangeur thermique (HX), refroidi par l'air dynamique ou l'air ambiant, et/ou par un vapour cycle et/ou par une turbine (T) destinée à détendre l'air comprimé dans le compresseur (C).

7. Système de climatisation pour avion selon l'une quelconque des revendications précédentes, **caractérisé en ce que** dans la première conduite (10) sont disposés une turbine (T), destinée à détendre l'air comprimé dans le compresseur (C), et un circuit de déshydratation, monté en amont de la turbine (T).

8. Système de climatisation pour avion selon l'une quelconque des revendications précédentes, **caractérisé en ce que** dans la première conduite (10) est disposée une turbine (T) destinée à détendre l'air comprimé par le compresseur (C), et **en ce que** la turbine (T) est logée avec le compresseur (C) sur un arbre.

9. Système de climatisation pour avion selon l'une quelconque des revendications précédentes, **caractérisé en ce qu'**il est prévu au moins un moteur (M) relié au compresseur (C) et destiné à actionner le compresseur (C).

10. Système de climatisation pour avion selon les revendications 8 et 9, **caractérisé en ce que** le compresseur (C), la turbine (T) et le moteur (M) sont logés sur un arbre.

11. Système de climatisation pour avion selon l'une quelconque des revendications précédentes, **caractérisé en ce que** le compresseur (C) est réalisé avec un ou plusieurs étages.

12. Système de climatisation pour avion selon l'une quelconque des revendications précédentes, **caractérisé en ce que** le compresseur (C) est formé par plusieurs unités de compression, qui sont réalisées avec un ou plusieurs étages et qui sont disposées séparément les unes derrière les autre ou sont reliées entre elles par un arbre.

13. Système de climatisation pour avion selon la revendication 11 ou 12, **caractérisé en ce qu'**il est prévu un ou plusieurs dispositifs de refroidissement intermédiaire entre les unités de compression ou entre les étages du compresseur (C) à plusieurs étages.

14. Système de climatisation pour avion selon l'une quelconque des revendications précédentes, **caractérisé en ce que**, hormis le compresseur (C), il est prévu un ou plusieurs autres compresseurs, qui sont actionnés par un moteur et qui peuvent fonctionner indépendamment du compresseur (C) et parallèlement à celui-ci.

15. Système de climatisation pour avion selon l'une quelconque des revendications précédentes, **caractérisé en ce que** le dispositif d'étranglement (TCV_H), situé dans le by-pass (20), et le dispositif d'étranglement (TCV_C), situé dans la première conduite (10), sont réalisés sous forme d'éléments séparés ou sont formés par un module commun.

16. Système de climatisation pour avion selon l'une quelconque des revendications précédentes, **caractérisé en ce qu'**il est prévu un régulateur de débit (ECU) pour le réglage du débit massique à travers le système de climatisation de l'avion, **en ce qu'**il est prévu un ou plusieurs dispositifs de mesure du débit (40), reliés au régulateur de débit, ainsi que des actionneurs, au moyen desquels il est possible de faire varier le débit massique.

17. Système de climatisation pour avion selon la revendication 16, **caractérisé en ce que** le ou les actionneurs sont formés par des moyens destinés à régler la vitesse de rotation d'un moteur (M) actionnant le compresseur (C).

18. Système de climatisation pour avion selon la revendication 16 ou 17, **caractérisé en ce que** le régulateur de débit (ECU) et le régulateur de température (ECU) sont formés par des éléments différents ou par un contrôleur.

19. Système de climatisation pour avion selon l'une quelconque des revendications précédentes, **caractérisé en ce que** le système de climatisation de l'avion comporte une turbine (T) destinée à détendre l'air comprimé par le compresseur (C), et **en ce que** le by-pass (20) débouche dans la première conduite (10) en aval de la turbine (T).

20. Système de climatisation pour avion selon l'une quelconque des revendications précédentes, **caractérisé en ce que** le système de climatisation de l'avion comporte une turbine (T) destinée à détendre l'air comprimé par le compresseur (C), ainsi qu'un condenseur (COND), ladite turbine (T) étant montée en aval de ce dernier, de telle sorte que l'air sortant de la turbine afflue à travers le côté froid du condenseur (COND) et que le by-pass (20) débouche dans la première conduite (10) en aval du condenseur (COND).

21. Système de climatisation pour avion selon l'une quelconque des revendications précédentes, **caractérisé en ce que** dans la première conduite (10) est disposé un échangeur thermique (HX) à air dynamique, ainsi qu'un circuit de déshydratation, et **en ce que** le dispositif d'étranglement (TCV_C), monté dans la première conduite (10), est monté en amont de l'échangeur thermique (HX) à air dynamique, est disposé entre l'échangeur thermique (HX) à air dynamique et le circuit de déshydratation ou est monté en aval du circuit de déshydratation.

22. Système de climatisation pour avion selon l'une quelconque des revendications précédentes, **caractérisé en ce qu'**il est prévu une conduite de liaison (50), par laquelle la sortie du ou des compresseur(s) (C) est reliée à l'entrée de celui-ci ou ceux-ci, et **en ce que** dans la conduite de liaison (50) est disposée une vanne (ASV) par laquelle il est possible de faire varier le débit massique de l'air circulant à travers la conduite de liaison (50).

23. Système de climatisation pour avion selon la revendication 22, **caractérisé en ce qu'**il est prévu une unité de réglage, qui est destinée à régler la température de l'air sortant du compresseur et qui est reliée à un capteur de température destiné à mesurer la température de l'air sortant du compresseur, ainsi qu'à la vanne (ASV).

24. Système de climatisation pour avion selon l'une quelconque des revendications précédentes, **caractérisé en ce qu'**il est prévu une buse de turbine variable et **en ce que** le dispositif d'étranglement (TCV_C, VTN), situé dans la première conduite (10), est formé exclusivement ou également par la buse de turbine (VTN) variable.

25. Procédé de fonctionnement d'un système de climatisation pour avion, en particulier un système de climatisation pour avion selon l'une quelconque des revendications 1 à 24, avec un compresseur (C), avec une première conduite (10), qui est reliée au côté pression du compresseur (C) et dans laquelle sont disposés un ou plusieurs dispositifs de refroidissement, montés en aval du compresseur (C) et destinés à refroidir l'air comprimé dans le compresseur (C), ainsi qu'avec une deuxième conduite réalisée sous forme de by-pass (20), qui est également relié au côté pression du compresseur (C) et est disposé de telle sorte qu'il guide au moins une partie de l'air, comprimé dans le compresseur (C), dans le by-pass autour d'au moins un des dispositifs de refroidissement, sachant que dans le by-pass (20) est disposé un dispositif d'étranglement (TCV_H), au moyen duquel il est possible de faire varier le débit massique de l'air guidé à travers le by-pass (20), sachant que dans la première conduite (10) est disposé un dispositif d'étranglement (TCV_C, VTN), au moyen duquel il est possible de faire varier le débit massique de l'air guidé à travers la première conduite (10), et sachant que dans un premier mode de service, en cas d'agrandissement du passage du dispositif d'étranglement (TCV_H) situé dans le by-pass (20), il se produit une diminution du passage du dispositif d'étranglement (TCV_C, VTN) situé dans la première conduite (10), et inversement, en cas de diminution du passage du dispositif d'étranglement (TCV_H) situé dans le by-pass (20), il se produit un agrandissement du passage du dispositif d'étranglement (TCV_C, VTN) situé dans la première conduite (10),
**caractérisé en ce que** dans un deuxième mode de service, en cas d'agrandissement du passage du dispositif d'étranglement (TCV_H) situé dans le by-pass (20), il se produit un agrandissement du passage du dispositif d'étranglement (TCV_C, VTN) situé dans la première conduite (10), et en cas de diminution du passage du dispositif d'étranglement (TCV_H) situé dans le by-pass (20), il se produit une diminution du passage du dispositif d'étranglement (TCV_C, VTN) situé dans la première conduite (10),
sachant que le système de climatisation pour avion peut fonctionner tant dans le premier que dans le deuxième mode de service.

26. Procédé selon la revendication 25, **caractérisé en ce que** la variation des passages des dispositifs d'étranglement (TCV_C, TCV_H) est effectuée de telle sorte que la pression au niveau de la sortie du compresseur ne varie pas sous l'effet des variations des passages des dispositifs d'étranglement (TCV_C, TCV_H).

27. Procédé selon la revendication 25 ou 26, **caractérisé en ce que** la température de l'air circulant à travers le système de climatisation pour avion est mesurée et est comparée à une valeur de consigne, et **en ce que**, en cas de divergence entre la valeur de consigne et la valeur réelle, il est effectué, en vue du réglage de la température, une variation du passage du dispositif d'étranglement (TCV_H) situé dans le by-pass (20).

28. Procédé selon la revendication 27, **caractérisé en ce que** le by-pass (20) débouche dans la première conduite (10) au niveau d'un point d'embouchure et la température est mesurée en aval et/ou en amont du point d'embouchure.

29. Procédé selon la revendication 27 ou 28, **caractérisé en ce que** le système de climatisation pour avion comporte un circuit de déshydratation, muni d'un réchauffeur (REH), d'un condenseur (COND) et d'un dispositif de déshydratation (WE), et **en ce que** la température est mesurée entre le condenseur (COND) et le réchauffeur (REH).

30. Procédé selon l'une quelconque des revendications 25 à 29, **caractérisé en ce qu'**il se produit une variation de la température de l'air au niveau de la sortie du compresseur par le fait que la sortie du compresseur est reliée à l'entrée du compresseur sous l'effet de l'ouverture d'une vanne (ASV).

31. Procédé selon la revendication 30, **caractérisé en ce que** la température de l'air au niveau de la sortie du compresseur est réglée au moyen d'une unité de réglage.

32. Procédé selon l'une quelconque des revendications 25 à 31, **caractérisé en ce que**, indépendamment du réglage de la température, il est effectué un réglage du débit massique de l'air sortant du compresseur.

33. Procédé selon l'une quelconque des revendications 25 à 32, **caractérisé en ce que** dans la première conduite (10) est disposée une buse de turbine (VTN) variable, qui forme le dispositif d'étranglement.

34. Procédé selon l'une quelconque des revendications 25 à 33, **caractérisé en ce que** dans la première conduite (10) sont disposés plusieurs dispositifs d'étranglement (TCV_C, VTN), et **en ce que** l'un de ces dispositifs d'étranglement est formé par une buse de turbine (VTN) variable.
